# EUROPÄISCHE PATENTSCHRIFT

(11) **EP 2 681 384 B1**
(45) Veröffentlichungstag und Bekanntmachung des Hinweises auf die Patenterteilung: **26.11.2014**
(21) Anmeldenummer: 12707517.4
(22) Anmeldetag: 28.02.2012
(51) Int. Cl.: E04H 12/08, E01F 9/018, F21V 21/10, F21S 8/08, F21V 23/00, F21W 131/10, F21S 9/03, B21C 37/08, B21D 5/08, B21D 53/88

(54) **SICHERHEITSTRAGWERK**
SAFETY SUPPORTING STRUCTURE
OSSATURE DE SÉCURITÉ

(30) Priorität: 28.02.2011 DE 102011004865; 28.02.2012 DE 102012101591
(43) Veröffentlichungstag der Anmeldung: 08.01.2014
(73) Patentinhaber: Elopole GmbH, 85049 Ingolstadt (DE)
(72) Erfinder: HERZOG, Karlheinz, 85049 Ingolstadt (DE)
(74) Vertreter: Hoffmann Eitle
(86) Internationale Anmeldenummer: PCT/EP2012/053336
(87) Internationale Veröffentlichungsnummer: WO 2012/116974

(56) Entgegenhaltungen:
- WO-A1-2008/127168
- WO-A2-2009/009425
- WO-A2-2009/066065
- DE-A1-102007 008 328
- GB-A- 1 202 183

## Beschreibung

Die vorliegende Erfindung betrifft ein Sicherheitstragwerk, welches in einem Rollformverfahren hergestellt ist, sowie ein Verfahren zu dessen Herstellung.

Sicherheitstragwerke werden überall dort eingesetzt, wo die Aufprallenergie eines Fahrzeuges zumindest teilweise absorbiert werden soll, so dass die Unfallfolgen für die Insassen gemindert werden. So werden beispielsweise Lichtmasten entsprechend der Norm DIN EN 12767 "Passive Sicherheit von Tragkonstruktionen von Gegenständen der Strassenausstattung" in die Klassen NE (non-energy-absorbing), LE (low-energy-absorbing) und HE (high-energy-absorbing) eingeteilt. Bisher bekannte Lichtmasten erfüllen diese Erfordernisse durch die Anpassung des Materials sowie der Materialdicke nur bedingt. Deshalb finden zur Klassifizierung nach DIN EN 12767 sogenannte "slip-base"-Lösungen für Aluminium- bzw. Stahlrohrmasten Verwendung. Hierbei werden die Masten mit einer Grundplatte auf einem Fundament verschraubt, wobei sich diese Verbindung ab einer vorbestimmten Krafteinwirkung bei einem Aufprall eines Fahrzeuges löst. Diese Lösungen sind jedoch aufwändig und teuer. Darüber hinaus ist die Wirkung dieser Lösung einerseits von der Art der Befestigungsmittel, beispielsweise der Auswahl der verwendeten Schrauben im Hinblick auf deren Scherfestigkeit, und andererseits von dem Aufprallwinkel auf den Mast stark abhängig.

Ein Sicherheitstragwerk mit den Merkmalen im Oberbegriff des Anspruchs 1 ist aus der WO 2009/066065 A2 bekannt. Ferner offenbart die WO 2008/127168 A1 ein Sicherheitstragwerk, das konisch verjüngt ist und im Rollformverfahen aus einem Metallblech gebildet ist oder von einem Coil in Längs- und Querrichtung beschnitten wird, um eine konische Form darzustellen. Weitere Sicherheitstragwerke sind dem Fachmann aus der DE 10 2007 008 328 A1, die ein Sicherheitstragwerk aus extrodiertem Aluminium beschreibt, oder der GB 1 202 183 A, die die Verbindung zwischen einem gebogenen und einem geradlinigen Mast beschreibt, um eine Relativdrehung der beiden Teile zu verhindern, bekannt.

Aufgabe der vorliegenden Erfindung ist es somit, eine konstruktiv einfache und preiswerte Lösung für ein Sicherheitstragwerk bereitzustellen.

Die der Erfindung zugrundeliegende Aufgabe wird durch die Merkmale des Anspruchs 1 gelöst.

Erfindungsgemäß ist das Sicherheitstragwerk in einem Rollformverfahren aus einem Stahlband von einem Coil herunter hergestellt. Hierdurch bedingt weist das Sicherheitstragwerk über seine gesamte Länge eine gleiche abgewickelte Breite auf. Infolgedessen läuft das Sicherheitstragwerk nicht konisch zu, sondern ist vorzugsweise im Wesentlichen zylindrisch ausgebildet. Ferner weist das Sicherheitstragwerk zumindest in seinem bodennahen Bereich im Querschnitt Eckbereiche mit einem ersten Radius und Seitenbereiche mit einem zweiten Radius auf. Die Eckbereiche und die Seitenbereiche sind nach außen hin derart gewölbt, dass das Sicherheitstragwerk beim Aufprall eines Fahrzeuges definiert knickt. Mittels der derart ausgebildeten Eckbereiche und Seitenbereiche wird die Aufprallenergie zumindest teilweise absorbiert, so dass im Rahmen der passiven Sicherheit eine Verletzung der PKW-Insassen vermieden oder zumindest die Unfallfolgen reduziert werden. Ein weiterer Vorteil des Sicherheitstragwerks besteht darin, dass dieses im Vergleich zu bekannten Lösungen durch die Herstellung vom Coil um ein Vielfaches günstiger ist. Des Weiteren kann in Abhängigkeit des ersten und zweiten Radius die Festigkeit des Sicherheitstragwerks an die entsprechenden Erfordernisse, wie beispielsweise passive Sicherheit oder Schnee- und Windlastverhalten, optimiert werden. Ferner kann der Innenraum bzw. Hohlraum des Sicherheitstragwerks somit großzügig ausgelegt werden, so dass hierin weitere Teile wie beispielsweise eine Verkabelung, Energieerzeugungs-, Energiespeicher-, Sensor-, Kommunikations-und/oder Steuereinheit problemios Platz finden. Erfindungsgemäß hat das Sicherheitstragwerk eine Wandstärke zwischen 0,7 mm und 4 mm. Um die Wandstärke des Sicherheitstragwerks reduzieren zu können, ist es besonders vorteilhaft, wenn der Sicherheitsmast aus einem höherfesten, insbesondere S 500 MC oder S 700 MC, und/oder hochfesten Stahl hergestellt ist. Hochfester Stahl weist bei Raumtemperatur eine Mindeststreckgrenze von 210 bis 550 MPa auf. Höherfester Stahl weist bei Raumtemperatur eine Mindeststreckgrenze von 550 bis 1.400 MPa auf. Somit kann das Volumen des Sicherheitstragwerkinnenraums bei im Wesentlichen gleichbleibendem Aussendurchmesser erhöht werden, so dass mehr Platz für Zusatzkomponenten, insbesondere in Kombination mit einem autarken Lichtmast, wie beispielsweise Verkabelung, Energieerzeugungs-, Energiespeicher-, Sensor-, Kommunikations-und/oder Steuereinheit vorhanden ist.

Besonders gute Sicherheitseigenschaften weist das Sicherheitstragwerk auf, wenn der erste Radius, insbesondere im Wesentlichen zehnmal, kleiner ist als der zweite Radius.

Eine hohe Festigkeit bei zugleich guten Sicherheitseigenschaften erhält das Sicherheitstragwerk, wenn der erste Radius zwischen 10 cm und 30 cm, insbesondere zwischen 15 cm und 25 cm, besonders bevorzugt 20 cm, beträgt und/oder der zweite Radius zwischen 190 cm und 210 cm, insbesondere 195 cm und 205 cm, besonders bevorzugt 200 cm, beträgt.

Vorteilhaft ist es, wenn das Sicherheitstragwerk an seinem Außenumfang, insbesondere im Bereich eines seiner Seitenbereiche, eine Wartungsöffnung und/oder eine Befestigungsöffnung aufweist, die als Freiformgeometrie ausgebildet ist. Die Freiformgeometrie ist derart ausgebildet, dass das Sicherheitstragwerk in diesen Bereichen eine genügend hohe Festigkeit und zugleich ein optimales Knickverhalten im Falle eines Aufpralls aufweist.

Eine einfache Befestigung von zusätzlichen modularen Bauteilen, wie beispielsweise Leuchtmittel, Leuchtmodulen und/oder Schildern, kann dadurch sichergestellt werden, wenn das Sicherheitstragwerk, insbesondere im Bereich seines freien Endes, eine Befestigungseinheit aufweist, die zwei Befestigungsöffnungen aufweist. Die beiden Befestigungsöffnungen sind vorzugsweise an zwei gegenüberliegenden Seitenbereichen des Sicherheitstragwerks zueinander fluchtend angeordnet. Somit kann zum Befestigen eines modularen Bauteils ein Befestigungsmittel, insbesondere ein Bolzen und/oder eine Schraube, quer durch das Sicherheitstragwerk gesteckt werden. Dieses Befestigungsmittel erstreckt sich dann durch die beiden Befestigungsöffnungen.

Vorteilhaft ist es, wenn das Sicherheitstragwerk zumindest zwei Befestigungseinheiten aufweist, die um die Längsachse des Sicherheitstragwerks zueinander um 90° verdreht und in Längsrichtung des Sicherheitstragwerks zueinander versetzt sind. Hierdurch kann die Schwächung des Sicherheitstragwerks bedingt durch die Befestigungsöffnungen über den Umfang und die Länge des Sicherheitstragwerks optimal aufgeteilt werden, so dass das Sicherheitstragwerk über seine gesamte Länge eine ausreichend hohe Festigkeit aufweist.

Die Festigkeit des Sicherheitstragwerks kann erhöht werden, wenn die Wartungsöffnung und/oder die Befestigungsöffnung vorteilhafterweise in ihrem Randbereich verprägt ist.

Vorteilhaft ist es, wenn das Sicherheitstragwerk als Hohlrohr ausgebildet ist, einteilig ausgebildet ist und/oder über seine gesamte Länge eine im Wesentlichen konstante Wandstärke aufweist. Somit kann das Sicherheitstragwerk sehr kostengünstig im Rahmen eines Rollformverfahrens hergestellt werden.

Ein besonders großes Innenvolumen zum Einbau zusätzlicher Komponenten weist das Sicherheitstragwerk auf, wenn die Wandstärke des Sicherheitstragwerks 2,5 mm beträgt.

Für eine entsprechende Auslegung im Kollisionsfall mit einem Fahrzeug ist es besonders vorteilhaft, wenn das Sicherheitstragwerk einen im Wesentlichen n-eckigen, insbesondere viereckigen, Querschnitt aufweist.

Besonders kostengünstig kann das Sicherheitstragwerk hergestellt werden, wenn dieses, insbesondere über seine gesamte Länge, in Längsrichtung eine Schweißnaht aufweist. Somit kann das Sicherheitstragwerk, insbesondere im Rahmen eines Rollformverfahrens, aus einem Stahlband zu einem Profil gebogen und anschließend in Längsrichtung zu einem geschlossenen Profil verschweißt werden. Die Schweißnaht kann aber auch zur Beeinflussung des Energieabsorptionsverhaltens verwendet werden, indem sie derart am Außenumfang des Sicherheitstragwerks angeordnet ist, dass das Sicherheitstragwerk definiert knickt.

Vorteilhaft ist es, wenn die Schweißnaht an ihrer Außenseite geglättet ist, da der Sicherheitsmasten somit mit einer Farbschicht versehen werden kann.

Vorteilhaft ist es, wenn das Sicherheitstragwerk, insbesondere über seine gesamte Länge und/oder in eine Richtung, gekrümmt ist. Somit ragt das freie Ende des Sicherheitstragwerks, wenn zur Aufnahme einer Straßenbeleuchtung Verwendung findet, weiter in die Straße hinein, so dass diese besser ausgeleuchtet wird. Des Weiteren kann mit einer im bodennahen Bereich entsprechend ausgebildeten Krümmung des als Sicherheitsmasten ausgebildeten Sicherheitstragwerks das Energieabsorptionsverhalten im Kollisionsfall mit einem Fahrzeug verbessert werden. Ferner eignet sich das Sicherheitstragwerk somit hervorragend zur Anbringung in einer Kurve als Leitplanke.

Auch ist es vorteilhaft, wenn das Sicherheitstragwerk an seinem Außenumfang zumindest eine Nut und/oder Rippe aufweist, die sich parallel zur Längsrichtung und/oder über die gesamte Länge des Sicherheitstragwerks erstreckt. Die Nut und/oder Rippe kann somit zur Führung, Befestigung und/oder Aufnahme von zusätzlichen Vorrichtungen, z.B. einem Reinigungsroboter, einem Mülleimer, einem Schild, Lichtmodulen und/oder elektronischen Bauteilen, dienen.

Besonders vorteilhaft ist es, wenn das Sicherheitstragwerk als Sicherheitsmast zum Verankern im Boden ausgebildet ist. Alternativ kann das Sicherheitstragwerk als Leitplanke ausgebildet sein.

Vorteilhaft ist es, wenn der Sicherheitsmast im Bereich seines freien Endes ein Leuchtmittel, ein Lichtmodul, eine Verkehrsleittechnik und/oder eine Beschilderung aufweist.

Vorteilhaft ist es, wenn sich die Nut und/oder Rippe über die gesamte Länge des Sicherheitsmasten erstreckt, da hierdurch insbesondere im Rahmen des Rollformverfahrens eine entsprechend kostengünstige Herstellung des Sicherheitsmasten gewährleistet ist. Des Weiteren kann die durchgängige Nut und/oder Rippe für einen Reinigungsroboter genutzt werden, der in der Nut und/oder Rippe geführt wird und somit über die gesamte Länge des Sicherheitsmasten fahren kann. Ferner können vorteilhafterweise in der Nut und/oder an der Rippe entlang Verkabelungen zum freien Ende des Sicherheitsmasten geführt werden.

Besonderes vorteilhaft ist es, wenn zum formschlüssigen Führen des Reinigungsroboters und/oder zur formschlüssigen Befestigung des Leuchtmittels, der Verkehrsleittechnik und/oder der Beschilderung die Nut und/oder Rippe eine Hinterschneidung aufweist. Somit kann vorteilhafterweise der Reinigungsroboter, das Leuchtmittel, die Verkehrsleittechnik und/oder die Beschilderung sehr fest, schnell und einfach in nur einer Nut und/oder an einer Rippe geführt und/oder gehalten werden.

Um den Reinigungsroboter und/oder die Schilderbefestigung in der Nut und/oder an der Rippe befestigen zu können, ist es vorteilhaft, wenn die Nut und/oder die Rippe einen Einführbereich aufweist. Hierbei ist es ferner für eine ergonomische Einführung vorteilhaft, wenn der Einführbereich im bodennahen Bereich des Sicherheitsmasten angeordnet ist.

Vorteilhaft ist es, wenn der Reinigungsroboter im bodennahen Bereich des Sicherheitsmasten in der Nut und/oder an der Rippe und/oder am Außenumfang des Sicherheitsmasten moniert wird. Zum Reinigen des Sicherheitsmasten fährt der Reinigungsroboter zunächst nach oben bis zum freien Ende des Sicherheitsmasten. Damit der Reinigungsroboter wieder selbstständig zum bodennahen Bereich des Sicherheitsmasten zurückfährt, ist es vorteilhaft, wenn der Sicherheitsmast im Bereich seines freien Endes, insbesondere am Ende der Nut und/oder Rippe, einen Anschlag für den Reinigungsroboter aufweist.

Besonders vorteilhaft ist es, wenn der Sicherheitsmast als autarker Lichtmast ausgebildet ist. Somit kann der Sicherheitsmast insbesondere in Gegenden eingesetzt werden, in denen beispielsweise aus Brandschutzgründen Stromleitungen nicht installierbar sind.

Ferner ist es vorteilhaft, wenn der Sicherheitsmast eine Verkabelung, Energieerzeugungs-, Energiespeicher-, Sensor-, Kommunikations- und/oder Steuereinheit aufweist. Somit kann der Sicherheitsmast autark betrieben werden. Ferner ist eine Kommunikation mit der Infrastruktur oder unterschiedlichen Verkehrsteilnehmern möglich, um beispielsweise die Lichtschaltung oder Ampelschaltung ökonomisch und/oder effizient zu gestallten.

Besonders vorteilhaft ist es, wenn die Verkabelung, Energieerzeugungs-, Energiespeicher-, Sensor-, Kommunikations- und/oder Steuereinheit form-, stoff- und/oder kraftschlüssig am Außenumfang des Sicherheitsmasten in und/oder an der Nut und/oder Rippe befestigt ist. Somit kann die radial geschlossene Struktur des Sicherheitsmasten über seine gesamte Länge bewahrt bleiben, da eine Öffnung für eine Wartungsklappe am Außenumfang des Sicherheitsmasten entfällt. Es ist somit kein Zugriff über die Wartungsklappe zur Installation oder Reparatur der ansonsten im Hohlraum des Sicherheitsmasten befindlichen Apparaturen von Nöten. Die Struktur des Sicherheitsmasten wird somit nicht geschwächt.

Ebenso ist es vorteilhaft, wenn die Verkabelung, Energieerzeugungs-, Energiespeicher-, Sensor-, Kommunikations- und/oder Steuereinheit gemeinsam in einem Trägermaterial, insbesondere mittels Vulkanisieren, zu einer Einheit verbunden sind. Somit erleichtert sich die Montage, da die Einheit schnell und einfach in die Nut einpressbar oder einkippbar ist.

Zum Schutz vor Vandalismus oder Witterungseinflüssen der Verkabelung, Energieerzeugungs-, Energiespeicher-, Sensor-, Kommunikations- und/oder Steuereinheit ist es vorteilhaft, wenn die Nut, insbesondere über ihre gesamte Länge, mit einer Abdeckung verschlossen ist.

In einem erfindungsgemäßen Verfahren zum Herstellen eines Sicherheitstragwerks - insbesondere gemäß einem oder mehreren Merkmalen der vorherigen Beschreibung, wobei die Merkmale einzeln oder in beliebiger Kombination vorhanden sein können - wird in einem Rollformverfahren ein ebenes Stahlband von einem Coil herunter gefördert und um seine Längsachse von Walzen schrittweise zu einem Profil mit Eckbereichen, die einen ersten Radius aufweisen, und Seitenbereichen, die einen zweiten Radius aufweisen, umgeformt. Anschließend wird das Profil in Längsrichtung durch Schweißen geschlossen und zu einem Sicherheitstragwerk abgelängt. Hierdurch ist eine besonders kostengünstige Herstellung des Sicherheitstragwerks gewährleistet.

Vorteilhaft ist es, wenn in das Stahlband und/oder am Außenumfang des Profils eine Wartungsöffnung, eine Befestigungsöffnung und/oder eine Aussparung für ein Leuchtmittel eingefügt und/oder das freie Ende mit einem Deckel verschlossen wird. Aus gleichen Gründen ist es ebenso vorteilhaft, wenn die Aussparung mit einem lichtdurchlässigen Element verschlossen wird.

Eine sehr einfache und kostengünstige Montage ist gewährleistet, wenn in der Nut eine Verkabelung, Energieerzeugungs-, Energiespeicher-, Sensor-, Kommunikations- und/oder Steuereinheit befestigt wird.

Weitere Vorteile der Erfindung sind in den nachfolgenden Ausführungsbeispielen beschrieben. Es zeigt:
- **Fig. 1**: eine Seitenansicht eines Sicherheitsmasten,
- **Fig. 2**: eine Detailansicht des oberen freien Endes des Sicherheitsmasten,
- **Fig. 3a - 3h**: unterschiedliche Querschnitte mit Nuten und/oder Rippen des Sicherheitsmasten, insbesondere im bodennahen Bereich,
- **Fig. 4**: eine perspektivische Ansicht eines Sicherheitsmasten mit einem Lichtmodul,
- **Fig. 5**: eine perspektivische Ansicht eines konisch nach oben hin zulaufenden Sicherheitsmasten,
- **Fig. 6**: eine perspektivische Ansicht eines Sicherheitsmasten mit einem Lichtmodul
- **Fig. 7**: Querschnitt des Sicherheitsmasten aus Fig. 6,
- **Fig. 8**: einen autarken Sicherheitsmasten,
- **Fig. 9**: eine alternative Ausführungsform des Sicherheitstragwerks mit Eckbereichen und Seitenbereichen, die einen Radius aufweisen, und
- **Fig. 10**: einen Sicherheitsmasten mit Befestigungsöffnungen und einer Wartungsöffnung.

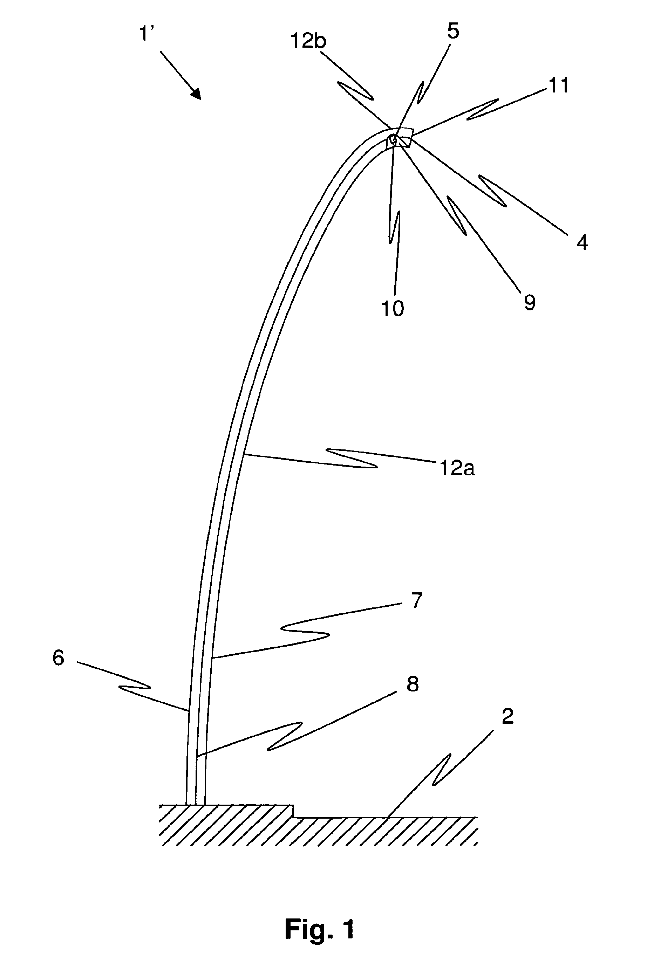

In den folgenden Ausführungsbeispielen ist das Sicherheitstragwerk 1 als Sicherheitsmast 1' ausgebildet. Fig. 1 zeigt den Sicherheitsmasten 1', der in einem Boden 2 verankert ist. Der Sicherheitsmast 1' ist als Hohlrohr ausgebildet und weist ein im Bereich seines freien Endes 4 angeordnetes Leuchtmittel 5 auf. Alternativ oder zusätzlich kann auch eine hier nicht dargestellte Verkehrsleittechnik und/oder eine Beschilderung angeordnet sein.

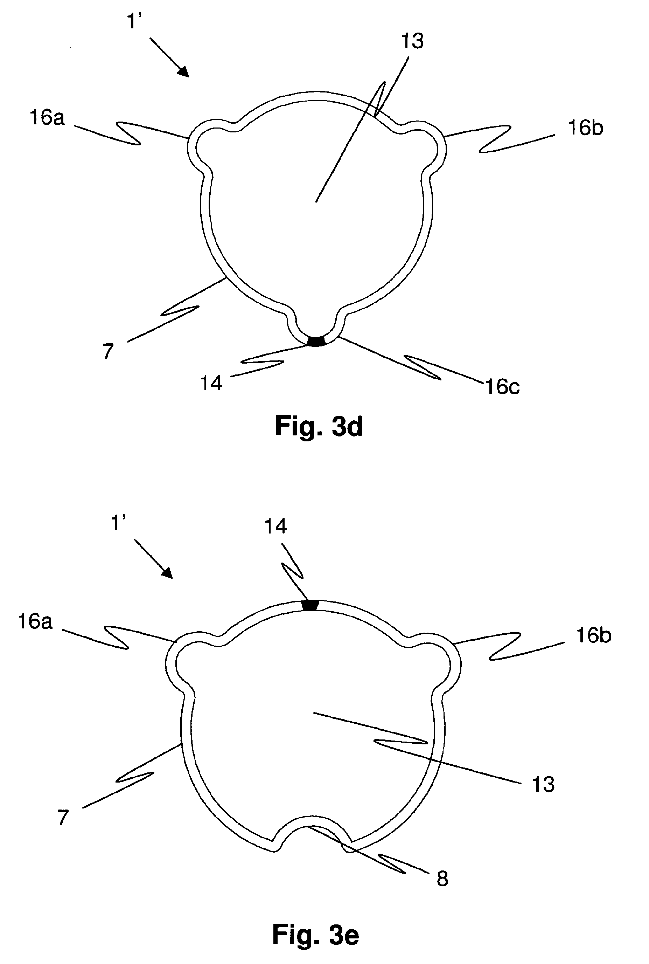

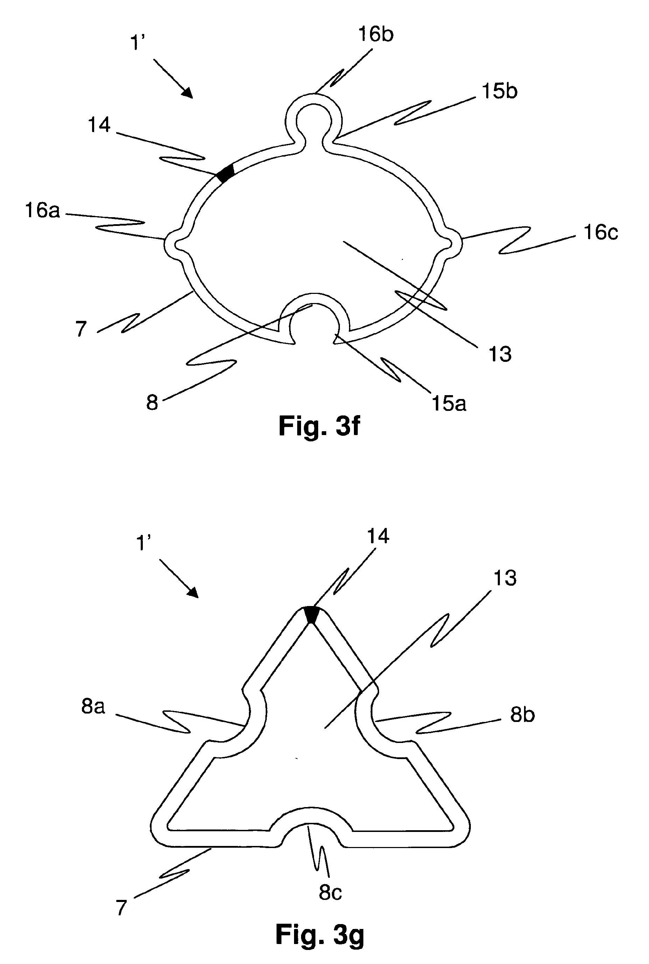

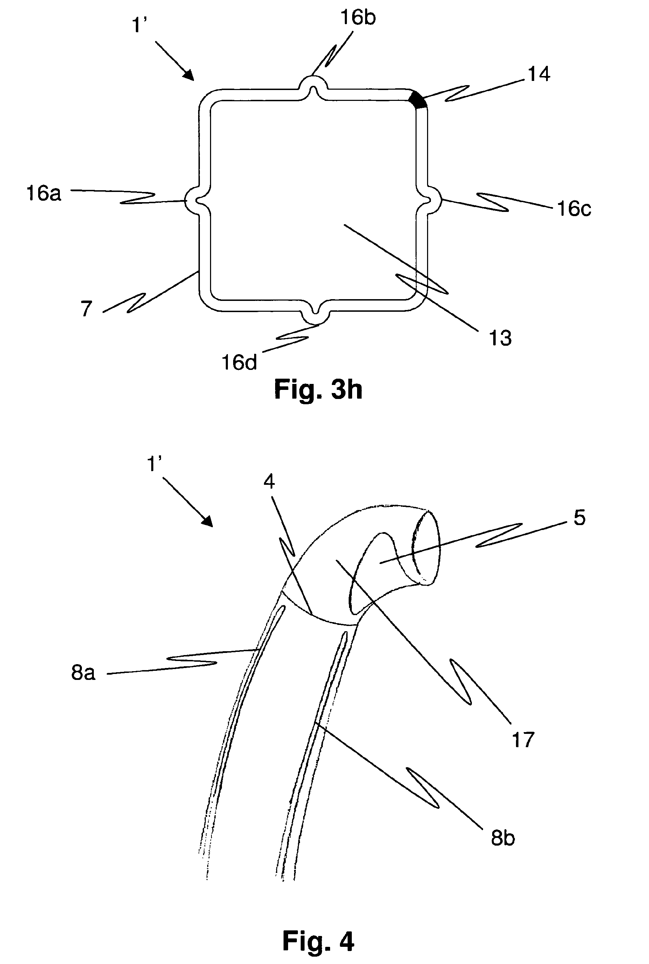

Der Sicherheitsmast 1' weist an seinem Außenumfang 7 zumindest in seinem bodennahen Bereich 6 eine Nut 8 auf. Die Nut 8 ist derart am Sicherheitsmast 1' angeordnet, dass dieser bei einem Aufprall eines Fahrzeuges definiert knickt. Ziel ist es somit, im Rahmen der passiven Sicherheit die Aufprallenergie zum Insassenschutz zumindest teilweise zu absorbieren. Die Nut 8 ist im vorliegenden Ausführungsbeispiel seitlich am Sicherheitsmast 1' angeordnet. Alternativ oder zusätzlich kann gemäß Figuren 3d, 3e, 3f und 3h eine Rippe 16 am Außenumfang 7 ausgebildet sein.

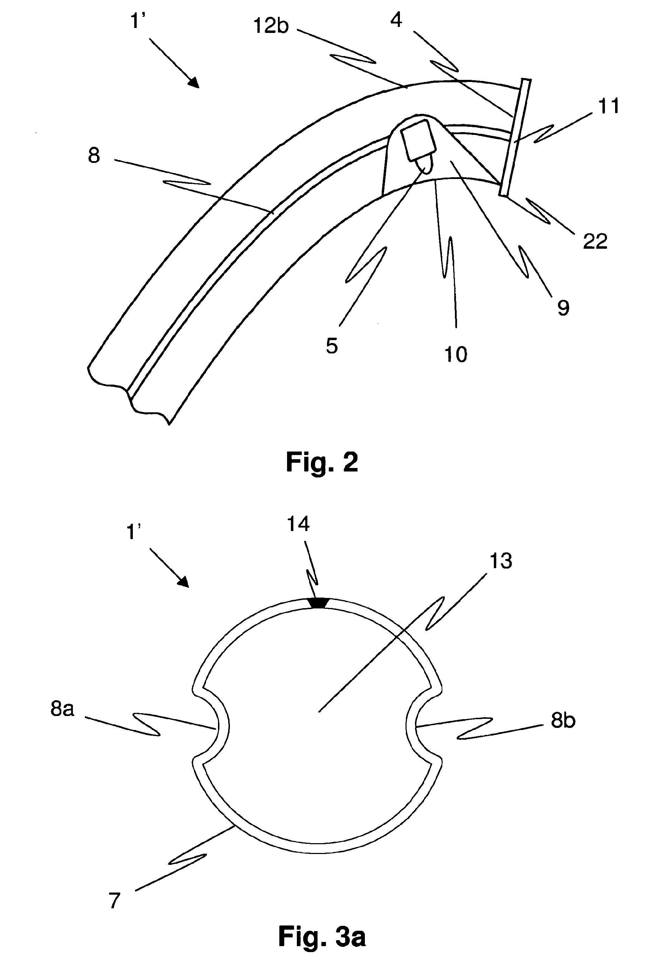

Der Sicherheitsmast 1' ist in dem in Fig. 1 dargestellten Ausführungsbeispiel einteilig ausgebildet. Das Leuchtmittel 5 ist demnach, wie in Fig. 2 ersichtlich, in einer Aussparung 9 des Sicherheitsmasten 1' im Bereich seines freien Endes 4 angeordnet. Zum Schutz des Leuchtmittels 5 ist die Aussparung 9 mit einem lichtdurchlässigen Element 10 verschlossen. Des Weiteren ist das freie Ende 4 insbesondere mit einem Deckel 11 abgedichtet.

Gemäß Fig. 1 weist der Sicherheitsmast 1' im Wesentlichen über seine gesamte Länge vom Boden ausgehend eine homogene Krümmung 12a auf. Vorteilhafterweise kann somit das Leuchtmittel 5 näher in den Bereich der auszuleuchtenden Straße bzw. des Gehwegs gebracht werden, so dass sich die Ausleuchtung verbessert. Im Bereich des freien Endes 4 weist der Sicherheitsmast 1' eine zweite Krümmung 12b auf, mittels derer das Leuchtmittel 5 in Richtung der auszuleuchtenden Straße geschwenkt ist. Die zweite Krümmung 12b ist im Vergleich zur ersten Krümmung 12a stärker gekrümmt. Der erste Abschnitt des Sicherheitsmasten 1', über den sich die erste Krümmung 12a erstreckt, ist ferner länger ausgebildet als der zweite Abschnitt, über den sich die zweite Krümmung 12b erstreckt.

Des Weiteren erstreckt sich die Nut 8 gemäß Fig. 1 in Längsrichtung über die gesamte Länge des Sicherheitsmasten 1'. Alternativ kann sich jedoch die sich parallel zur Mastlängsrichtung erstreckende Nut 8 auch lediglich auf den bodennahen Bereich 6 beschränken. Ferner ist der Sicherheitsmast 1' aus einem hochfesten Stahl, insbesondere im Rahmen eines Rollformverfahrens, hergestellt, so dass vorteilhafterweise die Wandstärke relativ dünn ausgelegt werden kann.

Um den Sicherheitsanforderungen gerecht zu werden, ist der bodennahe Bereich 6 des Sicherheitsmasten 1', insbesondere bezüglich Material, Wandstärke und/oder Querschnitt, derart ausgebildet, dass der bodennahe Bereich 6 die Aufprallenergie, insbesondere bei einem um im Wesentlichen 20° seitlich versetzten Aufprall eines Fahrzeugs, zumindest teilweise absorbiert.

Gemäß Fig. 2 weist der Sicherheitsmast 1' an seinem freien Ende 4 bzw. am Nutende einen Anschlag 3 auf. Dieser ist für einen hier nicht dargestellten Reinigungsroboter vorgesehen, der zum Reinigen des Sicherheitsmasten 1' in der Nut 8 in Längsrichtung des Sicherheitsmasten 1' geführt wird. Sobald der Reinigungsroboter an das freie Ende 4 gelangt, schlägt dieser an dem Anschlag 3 an. Hierdurch kann dieser nicht über das freie Ende 4 hinausfahren. Bedingt durch das Anschlagen am Anschlag 3 fährt der Reinigungsroboter in entgegengesetzter Richtung in den bodennahen Bereich 6.

Die Fig. 3a-3h zeigen unterschiedliche Querschnittvarianten des Sicherheitsmasten 1'. Die unterschiedlichen Querschnitte können sich auf den bodennahen Bereich 6 beschränken oder sich auch alternativ über die gesamte Länge des Sicherheitsmasten 1' erstrecken. In letzterem Fall können die Herstellungskosten des Sicherheitsmasten 1' stark reduziert werden, da dieser somit kostengünstig in einem Rollformverfahren herstellbar ist. Ferner kann die über die Länge gleichbleibende Geometrie zum Führen des hier nicht dargestellten Reinigungsroboters verwendet werden. Bei allen Querschnittvarianten der Figuren 3a-3h ist der nach unten gerichtete Bereich der hier nicht dargestellten Straße zugewandt.

Gemäß den Figuren 3a-3h weist der als Hohlrohr ausgebildete Sicherheitsmast 1' einen Hohlraum 13 auf. Wenn der Sicherheitsmast 1' aus einem hochfesten Stahl hergestellt ist, kann vorteilhafterweise die Wandstärke sehr dünn gewählt werden, so dass der Hohlraum 13 an Volumen gewinnt. Vorteilhafterweise erhöht sich somit das Platzangebot für weitere hier nicht dargestellte Bauteile, insbesondere Verkabelung, Energieerzeugungs-, Energiespeicher-, Sensor-, Kommunikations-, Steuereinheit und/oder andere elektronische Komponenten.

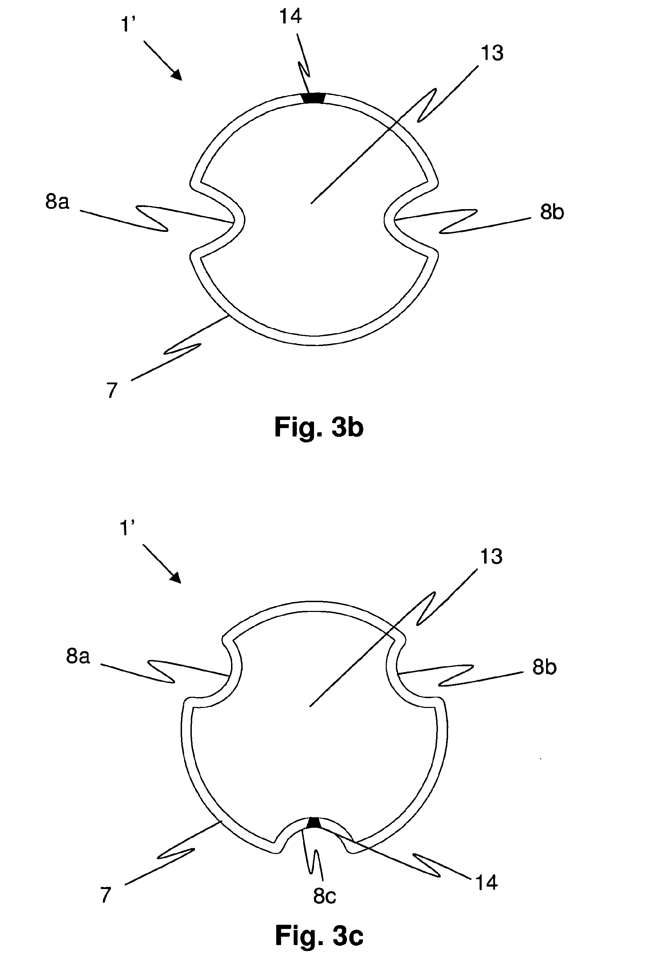

Zur energieabsorbierenden Auslegung des Flächenträgheitsmoments sind bei dem in Fig. 3a dargestellten Ausführungsbeispiel zwei Nuten 8a, 8b symmetrisch am Außenumfang 7 des Sicherheitsmasten 1' angeordnet. Ferner sind die beiden Nuten 8a, 8b seitlich am Sicherheitsmasten 1' angeordnet. Auf der straßenabgewandten Seite weist der Sicherheitsmast 1' eine Schweißnaht 14 auf. Diese erstreckt sich vorzugsweise genauso wie die Nuten 8a, 8b über die gesamte Länge des Sicherheitsmasten 1'. Die Nuten 8a, 8b sind in dem in Fig. 3a dargestellten Ausführungsbeispiel halbkreisförmig ausgebildet. Der Querschnitt des Sicherheitsmasten 1' ist ferner kreisförmig ausgebildet. Alternativ oder zusätzlich kann die Form der Nuten 8a, 8b gemäß Fig. 3b auch im Wesentlichen parabelförmig ausgebildet sein. Es ist aber auch jegliche andere Nutgeometrie denkbar.

Ferner kann die Anzahl der Nuten 8 sowie deren Anordnung am Außenumfang 7 beliebig variieren. So sind in Fig. 3c beispielsweise drei Nuten 8a, 8b, 8c in radial äquidistanten Abständen zueinander am Außenumfang 7 des Sicherheitsmasten 1' angeordnet. Die Schweißnaht 14 ist im Bereich der zur Straße zeigenden Nut 8c angeordnet.

Alternativ können die in den Fig. 3a und 3b dargestellten unterschiedlichen Nutausführungsformen auch als Rippen 16 ausgebildet sein. Hierbei sind die Nutformen am Außenumfang 7 zu spiegeln. So zeigt beispielsweise Fig. 3d drei halbkreisförmige Rippen 16a, 16b, 16c, die in äquidistanten Abständen zueinander am Außenumfang 7 angeordnet sind. Selbstverständlich können die Abstände zwischen den Rippen 16 und/oder Nuten 8 auch unterschiedlich groß ausgebildet sein.

Wie in Fig. 3e dargestellt, können in einem Querschnitt Nuten 8 sowie Rippen 16a, 16b beliebig kombiniert werden. Im vorliegen Fall ist im Bereich der Straßen zugewandten Seite eine Nut 8 und im Bereich der Straßen abgewandten Seite zwei Rippen 16a, 16b angeordnet. Die Schweißnaht 14 befindet sich am Außenumfang 7 zwischen den beiden Rippen 16a, 16b.

Ferner können die Nuten 8 und/oder die Rippen 16 mit einer Hinterschneidung 15 ausgebildet sein. So ist beispielsweise in Fig. 3f die Nut 8 mit einer Hinterschneidung 15a und die Rippe 16b mit einer Hinterschneidung 15b versehen. Die Hinterschneidungen 15a, 15b sind insbesondere zum Führen sowie formschlüssigen Ineinandergreifen des hier nicht dargestellten Reinigungsroboters oder zum Befestigen des/der hier nicht dargestellten Leuchtmittels, Verkehrsleittechnik und/oder Beschilderung vorteilhaft.

Alternativ kann der Querschnitt gemäß Fig. 3f elliptisch, Fig. 3g dreieckig oder Fig. 3h viereckig ausgebildet sein. Es ist aber auch jegliche andere geometrische Form denkbar. Selbstverständlich sind auch Freiformgeometrien vorstellbar.

Fig. 4 zeigt den oberen Bereich einer alternativen Ausführungsform des Sicherheitsmasten 1'. Hierbei ist der Sicherheitsmast 1' zweiteilig ausgebildet. Der im Boden befestigte Mastteil ist, wie gehabt, mit den Nuten 8a, 8b ausgebildet, die selbstverständlich alternativ oder zusätzlich Rippen 16 sein können. Am freien Ende 4 des Sicherheitsmasten 1' ist als zweites Teil ein Lichtmodul 17 befestigt, das das Leuchtmittel 5 aufnimmt. Die Nuten 8a, 8b erstrecken sich hierbei nicht auf den Bereich des Lichtmoduls 17, sondern lediglich über die gesamte Länge des Sicherheitsmasten 1'.

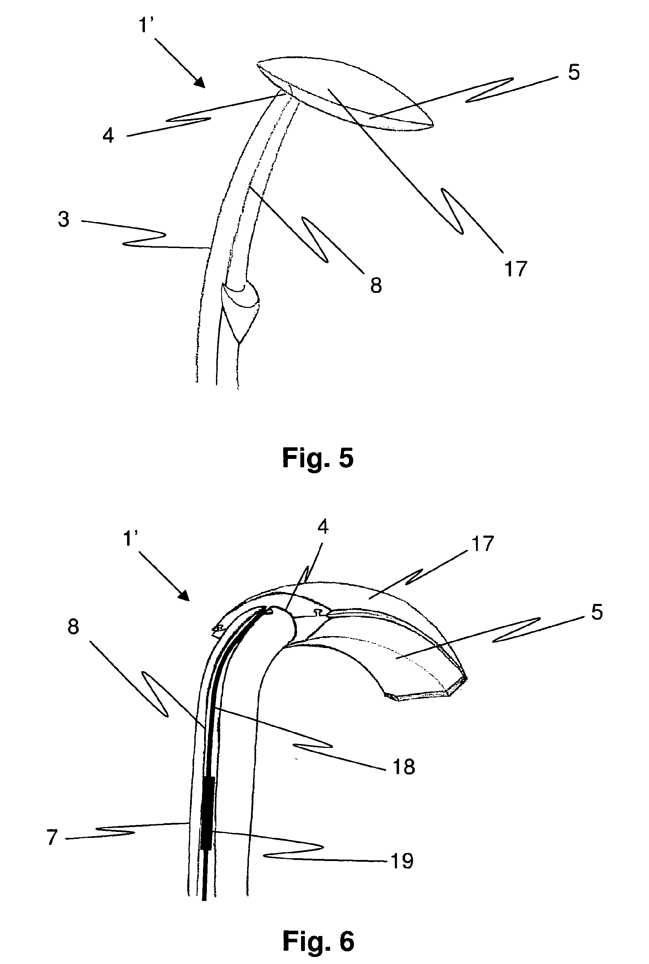

Fig. 5 und 6 zeigen beispielhaft alternative Ausführungsformen des Sicherheitsmasten 1' mit einem unterschiedlich ausgebildeten Lichtmodul 17.

Bei dem in Fig. 6 dargestellten Ausführungsbeispiel ist in der am Rücken des Sicherheitsmasten 1' befindlichen Nut 8 eine Verkabelung 18 sowie zumindest ein elektronisches Element 19, das insbesondere eine Energieerzeugungs-, Energiespeicher-, Sensor-, Kommunikations- und/oder Steuereinheit ist, form-, kraft- und/oder stoffschlüssig befestigt. Die Verkabelung 18 erstreckt sich hierbei vom Boden ausgehend über die gesamte Länge des Sicherheitsmasten 1' bis hin zu seinem freien Ende 4. Die Verkabelung sowie eines oder mehrere elektronische Elemente sind zu einer Einheit verbunden und können somit sehr schnell und einfach am Sicherheitsmasten montiert, insbesondere in die Nut eingeklipst werden.

Ein Wesentlicher Nachteil bekannter Masten besteht darin, dass diese im bodennahen Bereich 6 eine Aussparung zur Wartung der im Hohlraum 13 angebrachten Elektronik benötigen. Diese ist meist mit einer Wartungsklappe verschlossen. Durch diese Aussparung wird die Struktur des Mastes im sicherheitskritischen, bodennahen Bereich 6 geschwächt. Bei der in Fig. 6 dargestellten Variante bleibt die geschlossene Struktur des Mastquerschnitts erhalten. So ist die Verkabelung 18 sowie die elektronischen Elemente 19 in der am Außenumfang 7 angeordneten Nut 8 von außen leicht zugänglich.

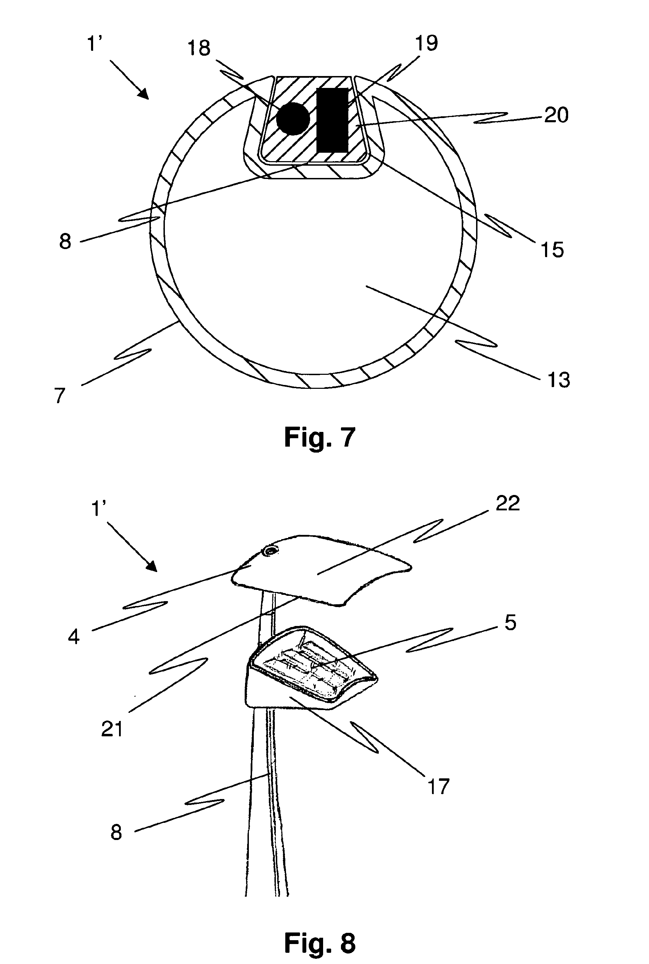

Gemäß Fig. 7 ist die Verkabelung 18 zusammen mit zumindest einem elektronischen Element 19 in einem Trägermaterial 20 als Einheit ausgebildet. Diese ist mittels der Hinterschneidung 15 formschlüssig in der Nut 8 befestigt. Aufgrund des Trägermaterials 20 ist die Verkabelung 18 sowie das elektronische Element 19 vor Witterung geschützt. Alternativ oder zusätzlich könnte die Nut 8 mit einer hier nicht dargestellten Abdeckung verschlossen sein. Ebenso muss die Einheit nicht zwingend, wie in Fig. 7 dargestellt, mit dem Außenumfang des Sicherheitsmasten 1' abschließen, sondern einzelne Komponenten, insbesondere ein Solarmodul, kann auch außerhalb der Nut 8 angeordnet sein.

Fig. 8 zeigt alternativ einen autarken Sicherheitsmasten 1'. Hierbei läuft als zusätzliche Variante der Querschnitt des Sicherheitsmasten 1' zu seinem freien Ende 4 hin konisch zu. Das Leuchtmittel 5 ist nach oben gerichtet und wird von einem im Bereich des freien Endes 4 angeordneten Spiegel 21 nach unten auf die hier nicht dargestellte Straße gespiegelt. Auf der Straßen abgewandten Seite des Spiegels 21 sind Solarzellen 22 angeordnet. Die durch die Solarzellen 22 erzeugte Energie wird an eine, hier nicht dargestellte, im Hohlraum angeordnete Energiespeichereinheit weitergeleitet und bei Bedarf von einer im Hohlraum angeordneten Steuereinheit an das Leuchtmittel 5 abgegeben.

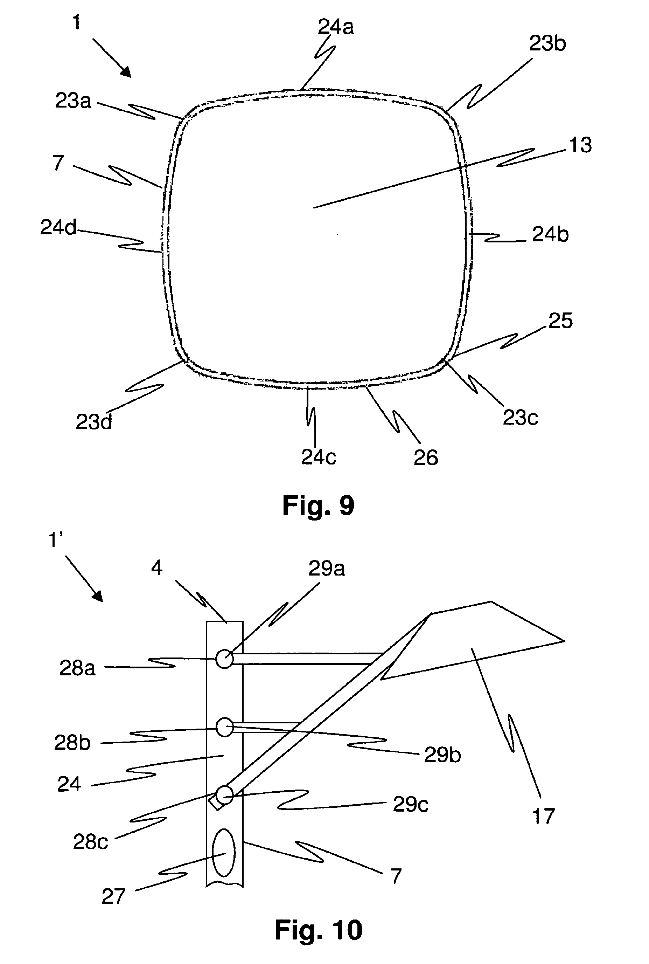

Figur 9 zeigt einen Querschnitt durch eine alternative Ausführungsform des Sicherheitstragwerks 1, das als Hohlprofil ausgebildet ist. Das Sicherheitstragwerk 1 weist über seine gesamte Länge den gleichen Durchmesser auf. Im Querschnitt weist das Sicherheitstragwerk 1 vier Eckbereiche 23a, 23b, 23c, 23d auf. Zwischen diesen ist jeweils ein Seitenbereich 24a, 24b, 24c, 24d angeordnet. Jeder Seitenbereich 24a, 24b, 24c, 24d grenzt unmittelbar an die zwei jeweils benachbarten Seitenbereiche 24a, 24b, 24c, 24d an. Alle Eckbereiche 23a, 23b, 23c, 23d weisen einen ersten Radius 25 auf. Alle Seitenbereiche 24a, 24b, 24c, 24d weisen einen zweiten Radius 26 auf. Der zweite Radius 26 ist größer als der erste Radius 25. Alle Eckbereiche 23a, 23b, 23c, 23d sowie Seitenbereiche 24a, 24b, 24c, 24d sind nach außen gebeult. Der Außenumfang 7 des Sicherheitstragwerks 1 ist demnach bauchig ausgebildet.

Figur 10 zeigt eine alternative Ausführungsform eines Sicherheitsmasten 1' im Bereich seines freien Endes 4. Im Bereich eines Seitenbereiches 24 weist der Sicherheitsmast 1' eine Wartungsöffnung 27 auf. Diese ist als Freiformgeometrie ausgebildet. Hierdurch wird eine optimale Festigkeit des Sicherheitsmasten 1' im Bereich der Wartungsöffnung 27 sichergestellt. Ferner weist der Sicherheitsmast 1' im Bereich des freien Endes 4 zum Befestigen des Lichtmoduls 17 Befestigungsöffnungen 28a, 28b, 28c auf. Hierbei sind jeweils zwei an gegenüberliegenden Seitenbereichen 24 zueinander fluchtend angeordnet, so dass ein Befestigungsmittel 29a, 29b, 29c durch den Sicherheitsmasten geschoben werden kann. Die Befestigungsöffnungen 28a, 28b, 28c sind als Freiformgeometrien ausgebildet, so dass der Sicherheitsmast 1 eine hohe Festigkeit aufweist.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn sie in unterschiedlichen Ausführungsbeispielen dargestellt und beschrieben sind.

### Bezugszeichenliste

- 1: Sicherheitstragwerk
- 1': Sicherheitsmast
- 2: Boden
- 3: Anschlag
- 4: Freies Ende
- 5: Leuchtmittel
- 6: Bodennaher Bereich
- 7: Außenumfang
- 8: Nut
- 9: Aussparung
- 10: lichtdurchlässiges Element
- 11: Deckel
- 12: Krümmung
- 13: Hohlraum
- 14: Schweißnaht
- 15: Hinterschneidung
- 16: Rippen
- 17: Lichtmodul
- 18: Verkabelung
- 19: Elektronisches Element
- 20: Trägermaterial
- 21: Spiegel
- 22: Solarzellen
- 23: Eckbereich
- 24: Seitenbereich
- 25: Erster Radius
- 26: Zweiter Radius
- 27: Wartungsöffnung
- 28: Befestigungsöffnung
- 29: Befestigungsmittel

## Patentansprüche

1. Sicherheitstragwerk (1), das
im Querschnitt Eckbereiche (23a, 23b, 23c, 23d) mit einem ersten Radius (25) und Seitenbereiche (24a, 24b, 24c, 24d) mit einem zweiten Radius (26) aufweist, wobei
die Eckbereiche (23a, 23b, 23c, 23d) und die Seitenbereiche (24a, 24b, 24c, 24d) nach außen hin derart gewölbt sind,
dass das Sicherheitstragwerk (1) beim Aufprall eines Fahrzeuges definiert knickt, **dadurch gekennzeichnet, dass** das Sicherheitstragwerk (1) aus einem höherfesten und/oder hochfesten Stahl in einem Rollformverfahren aus einem Stahlband von einem Coil herunter hergestellt ist, so dass das Sicherheitstragwerk (1) über seine gesamte Länge eine gleiche abgewickelte Breite aufweist wobei die Wandstärke des Sicherheitstragwerks (1) in einem Bereich zwischen 0,7 mm bis 4 mm liegt.

2. Sicherheitstragwerk nach dem vorherigen Anspruch, **dadurch gekennzeichnet, dass** der erste Radius (25), insbesondere im Wesentlichen zehnmal, kleiner ist als der zweite Radius (26).

3. Sicherheitstragwerk nach einem oder mehreren der vorherigen Ansprüche, **dadurch gekennzeichnet, dass** der erste Radius (25) zwischen 10 cm und 30 cm, insbesondere zwischen 15 cm und 25 cm, besonders bevorzugt 20 cm, beträgt und/oder der zweite Radius (26) zwischen 190 cm und 210 cm, insbesondere 195 cm und 205 cm, besonders bevorzugt 200 cm, beträgt.

4. Sicherheitstragwerk nach einem oder mehreren der vorherigen Ansprüche, **dadurch gekennzeichnet, dass** das Sicherheitstragwerk (1) an seinem Außenumfang (7), insbesondere im Bereich eines seiner Seitenbereiche (24a, 24b, 24c, 24d), eine Wartungsöffnung (27) und/oder eine Befestigungsöffnung (28) aufweist, die als Freiformgeometrie ausgebildet ist.

5. Sicherheitstragwerk nach Anspruch 4, **dadurch gekennzeichnet, dass** die Wartungsöffnung (27) und/oder die Befestigungsöffnung (28) in ihrem Randbereich verprägt ist.

6. Sicherheitstragwerk nach einem oder mehreren der vorherigen Ansprüche, **dadurch gekennzeichnet, dass** das Sicherheitstragwerk (1), insbesondere im Bereich seines freien Endes (4), eine Befestigungseinheit aufweist, die zwei Befestigungsöffnungen (28) aufweist, die am Sicherheitstragwerk (1), vorzugsweise an zwei seiner gegenüberliegenden Seitenbereiche (24a, 24b, 24c, 24d), zueinander fluchtend angeordnet sind.

7. Sicherheitstragwerk nach einem oder mehreren der vorherigen Ansprüche, **dadurch gekennzeichnet, dass** das Sicherheitstragwerk (1) zumindest zwei Befestigungseinheiten aufweist, die um die Längsachse des Sicherheitstragwerks zueinander um 90° verdreht und in Längsrichtung des Sicherheitstragwerks zueinander versetzt sind.

8. Sicherheitstragwerk nach einem oder mehreren der vorherigen Ansprüche, **dadurch gekennzeichnet, dass** das Sicherheitstragwerk (1) als Hohlrohr ausgebildet ist, einteilig ausgebildet ist und/oder über seine gesamte Länge eine im Wesentlichen konstante Wandstärke aufweist.

9. Sicherheitstragwerk nach einem oder mehreren der vorherigen Ansprüche, **dadurch gekennzeichnet, dass** die Wandstärke des Sicherheitstragwerks (1) 2,5 mm beträgt.

10. Sicherheitstragwerk nach einem oder mehreren der vorherigen Ansprüche, **dadurch gekennzeichnet, dass** das Sicherheitstragwerk (1) einen im Wesentlichen n-eckigen, insbesondere viereckigen, Querschnitt aufweist.

11. Sicherheitstragwerk nach einem oder mehreren der vorherigen Ansprüche, **dadurch gekennzeichnet, dass** das Sicherheitstragwerk (1) eine sich, insbesondere über seine gesamte Länge, in Längsrichtung erstreckende Schweißnaht (14) aufweist.

12. Sicherheitstragwerk nach einem oder mehreren der vorherigen Ansprüche, **dadurch gekennzeichnet, dass** das Sicherheitstragwerk (1), insbesondere über seine gesamte Länge, gekrümmt ist.

13. Sicherheitstragwerk nach einem oder mehreren der vorherigen Ansprüche, **dadurch gekennzeichnet, dass** das Sicherheitstragwerk (1) an seinem Außenumfang (7) zumindest eine Nut (8) und/oder Rippe (16) aufweist, die sich parallel zur Längsrichtung und/oder über die gesamte Länge des Sicherheitstragwerks (1) erstreckt.

14. Sicherheitstragwerk nach einem oder mehreren der vorherigen Ansprüche, **dadurch gekennzeichnet, dass** das Sicherheitstragwerk als Sicherheitsmast zum Verankern im Boden (2) und/oder als Leitplanke ausgebildet ist.

## Claims

1. Safety supporting structure (1) which has in cross-section, corner regions (23a, 23b, 23c, 23d) having a first radius (25) and side regions (24a, 24b, 24c, 24d) having a second radius (26), wherein the corner regions (23a, 23b, 23c, 23d) and the side regions (24a, 24b, 24c, 24d) are curved outwards such that the safety supporting structure (1) during a collision of a vehicle bends in defined manner, **characterised in that** the safety supporting structure (1) is produced from a higher-strength and/or high-strength steel in a roll-forming method from a steel strip of a coil therebelow so that the safety supporting structure (1) has over its entire length an equal unwound width, wherein the wall thickness of the safety supporting structure (1) lies in a range between 0.7 mm to 4 mm.

2. Safety supporting structure according to the preceding claim, **characterised in that** the first radius (25) is smaller, in particular essentially ten times, than the second radius (26).

3. Safety supporting structure according to one or more of the preceding claims, **characterised in that** the first radius (25) is between 10 cm and 30 cm, in particular between 15 cm and 25 cm, particularly preferably 20 cm, and/or the second radius (26) is between 190 cm and 210 cm, in particular 195 cm and 205 cm, particularly preferably 200 cm.

4. Safety supporting structure according to one or more of the preceding claims, **characterised in that** the safety supporting structure (1) has on its outer periphery (7), in particular in the region of one of its side regions (24a, 24b, 24c, 24d), a maintenance opening (27) and/or an attachment opening (28) which is designed as free-form geometry.

5. Safety supporting structure according to claim 4, **characterised in that** the maintenance opening (27) and/or the attachment opening (28) is embossed in its edge region.

6. Safety supporting structure according to one or more of the preceding claims, **characterised in that** the safety supporting structure (1), in particular in the region of its free end (4), has an attachment unit which has two attachment openings (28) which are arranged to be aligned with one another on the safety supporting structure (1), preferably on two of its opposite side regions (24a, 24b, 24c, 24d).

7. Safety supporting structure according to one or more of the preceding claims, **characterised in that** the safety supporting structure (1) has at least two attachment units which are rotated by 90° to one another about the longitudinal axis of the safety supporting structure and displaced with respect to one another in longitudinal direction of the safety supporting structure.

8. Safety supporting structure according to one or more of the preceding claims, **characterised in that** the safety supporting structure (1) is designed as a hollow tube, is designed to be in one piece and/or has an essentially constant wall thickness over its entire length.

9. Safety supporting structure according to one or more of the preceding claims, **characterised in that** the wall thickness of the safety supporting structure (1) is 2.5 mm.

10. Safety supporting structure according to one or more of the preceding claims, **characterised in that** the safety supporting structure (1) has an essentially n-cornered, in particular four-cornered, cross-section.

11. Safety supporting structure according to one or more of the preceding claims, **characterised in that** the safety supporting structure (1) has a welding seam (14) extending in longitudinal direction, in particular over its entire length.

12. Safety supporting structure according to one or more of the preceding claims, **characterised in that** the safety supporting structure (1) is curved, in particular over its entire length.

13. Safety supporting structure according to one or more of the preceding claims, **characterised in that** the safety supporting structure (1) has on its outer periphery (7) at least one groove (8) and/or rib (16) which extends parallel to the longitudinal direction and/or over the entire length of the safety supporting structure (1).

14. Safety supporting structure according to one or more of the preceding claims, **characterised in that** the safety supporting structure is designed as a safety mast for anchoring in the ground (2) and/or as a crash barrier.

## Revendications

1. Ossature de sécurité (1) qui présente en section transversale des zones de coin (23 a, 23b, 23c, 23d) avec un premier rayon (25) et des zones latérales (24a, 24b, 24c, 24d) avec un second rayon (26),
les zones de coin (23a, 23b, 23c, 23d) et les zones latérales (24a, 24b, 24c, 24d) étant courbées vers l'extérieur de telle manière que l'ossature de sécurité (1) plie de manière définie en cas de collision d'un véhicule, **caractérisée en ce que** l'ossature de sécurité (1) est fabriquée en un acier à la plus haute résistance et/ou en un acier très résistant dans un procédé de roulage d'un feuillard d'acier provenant d'une bobine de sorte que l'ossature de sécurité (1) présente sur sa longueur entière une largeur coudée identique, l'épaisseur de paroi de l'ossature de sécurité (1) se trouvant dans une plage comprise entre 0,7 et 4 mm.

2. Ossature de sécurité selon la revendication précédente, **caractérisée en ce que** le premier rayon (25) est notamment sensiblement 10 fois plus petit que le second rayon (26).

3. Ossature de sécurité selon l'une ou plusieurs des revendications précédentes, **caractérisée en ce que** le premier rayon (25) est compris entre 10 et 30 cm, en particulier entre 15 et 25 cm, de manière particulièrement préférée s'élève à 20 cm et/ou le second rayon (26) est compris entre 190 et 210 cm, en particulier entre 195 et 205 cm, de manière particulièrement préférée s'élève à 200 cm.

4. Ossature de sécurité selon l'une ou plusieurs des revendications précédentes, **caractérisée en ce que** l'ossature de sécurité (1) présente sur sa périphérie extérieure (7), en particulier dans la zone de l'une de ses zones latérales (24a, 24b, 24c, 24d) une ouverture de maintenance (27) et/ou une ouverture de fixation (28) qui est réalisée comme une géométrie de forme libre.

5. Ossature de sécurité selon la revendication 4, **caractérisée en ce que** l'ouverture de maintenance (27) et/ou l'ouverture de fixation (28) est estampée dans sa zone de bordure.

6. Ossature de sécurité selon l'une ou plusieurs des revendications précédentes, **caractérisée en ce que** l'ossature de sécurité (1) présente en particulier dans la zone de son extrémité libre (4) une unité de fixation qui présente deux ouvertures de fixation (28) qui sont agencées en alignement l'une par rapport à l'autre sur l'ossature de sécurité (1), de préférence sur deux de ses zones latérales (24a, 24b, 24c, 24d) en regard l'une de l'autre.

7. Ossature de sécurité selon l'une ou plusieurs des revendications précédentes, **caractérisée en ce que** l'ossature de sécurité (1) présente au moins deux ouvertures de fixation qui sont tournées de 90° l'une par rapport à l'autre autour de l'axe longitudinal de l'ossature de sécurité et sont décalées l'une de l'autre dans le sens longitudinal de l'ossature de sécurité.

8. Ossature de sécurité selon l'une ou plusieurs des revendications précédentes, **caractérisée en ce que** l'ossature de sécurité (1) est réalisée comme un tube creux, est réalisée d'un seul tenant et/ou présente sur toute sa longueur une épaisseur de paroi sensiblement constante.

9. Ossature de sécurité selon l'une ou plusieurs des revendications précédentes, **caractérisée en ce que** l'épaisseur de paroi de l'ossature de sécurité (1) s'élève à 2,5 mm.

10. Ossature de sécurité selon l'une ou plusieurs des revendications précédentes, **caractérisée en ce que** l'ossature de sécurité (1) présente une section transversale sensiblement polygonale, en particulier carrée.

11. Ossature de sécurité selon l'une ou plusieurs des revendications précédentes, **caractérisée en ce que** l'ossature de sécurité (1) présente un cordon de soudure (14) s'étendant en particulier sur toute sa longueur dans le sens longitudinal.

12. Ossature de sécurité selon l'une ou plusieurs des revendications précédentes, **caractérisée en ce que** l'ossature de sécurité (1) est courbée en particulier sur toute sa longueur.

13. Ossature de sécurité selon l'une ou plusieurs des revendications précédentes, **caractérisée en ce que** l'ossature de sécurité (1) présente sur sa périphérie extérieure (7) au moins une rainure (8) et/ou une nervure (16) qui s'étend parallèlement au sens longitudinal et/ou sur la longueur entière de l'ossature de sécurité (1).

14. Ossature de sécurité selon l'une ou plusieurs des revendications précédentes, **caractérisée en ce que** l'ossature de sécurité est réalisée comme un mât de sécurité pour l'ancrage dans le sol (2) et/ou comme une glissière de sécurité.
